# EUROPEAN PATENT APPLICATION

(11) **EP 4 632 545 A1**
(43) Date of publication of application: **15.10.2025**
(21) Application number: 24208110.7
(22) Date of filing: 22.10.2024
(51) Int. Cl.: G06F 3/0481, G06F 1/16, G06F 3/04886, H04M 1/02

(54) **DISPLAY METHOD, ELECTRONIC DEVICE, AND STORAGE MEDIUM**

(30) Priority: 09.04.2024 CN 202410425047
(71) Applicant: Beijing Xiaomi Mobile Software Co., Ltd., Beijing 100085 (CN)
(72) Inventor: CHANG, Zhenjie, Beijing, 100085 (CN); HU, Jubao, Beijing, 100085 (CN)
(74) Representative: Dehns Germany Partnerschaft mbB

(57) **Abstract**

A display method includes: in response to an electronic device entering a hover mode, displaying a first display content of a target application in a first display region of a screen, and displaying a second display content of the target application in a second display region of the screen; wherein, in the hover mode and a non-hover mode, an application window of the target application has the same size, the first display content has different sizes and positions, and the second display content has different sizes and positions.

## Description

### TECHNICAL FIELD

The present disclosure relates to the field of computer technology, and in particular, to a display method, electronic device, and storage medium.

### BACKGROUND

Foldable screen devices have rapidly developed in recent years, becoming a new trend in the smart device market. When using a foldable screen device, a user can either unfold a screen of the foldable screen device or fold it at various angles to meet user requirements in a variety of scenarios, so that the user can obtain a better user experience.

### SUMMARY

To overcome the problems in the related art, the present disclosure provides a display method, electronic device, and storage medium.

According to a first aspect of the present disclosure, a display method is provided, which includes: in response to an electronic device entering a hover mode, displaying a first display content of a target application in a first display region of a screen, and displaying a second display content of the target application in a second display region of the screen; where, in the hover mode and a non-hover mode, an application window of the target application has a same size, the first display content has different sizes and positions, and the second display content has different sizes and positions.

In some embodiments, in response to the electronic device entering the hover mode, displaying the first display content of the target application in the first display region of the screen, and displaying the second display content of the target application in the second display region of the screen, includes:
in response to the electronic device entering the hover mode, acquiring first configuration information, where the first configuration information is configured to indicate a first target size of the second display content in the hover mode; and
displaying, based on the first configuration information, the first display content in the first display region, and displaying the second display content in the second display region.

In some embodiments, displaying, based on the first configuration information, the first display content in the first display region, and displaying the second display content in the second display region, includes:
adjusting a size of the second display content to the first target size, and keeping a size of the first display content same as the adjusted size of the second display content; and
adjusting a position of the first display content to the first display region, and adjusting a position of the second display content to the second display region.

In some embodiments, the second display content includes a target child View of a Decor View; and adjusting the size of the second display content to the first target size includes:
adjusting a height of the target child View based on the first target size.

In some embodiments, adjusting the position of the first display content to the first display region and adjusting the position of the second display content to the second display region, includes:
adjusting coordinates of the second display content and moving the second display content from the first display region to the second display region; and
adjusting coordinates of a layer corresponding to the first display content and moving the first display content from the second display region to the first display region.

In some embodiments, the first display content includes a Surface View control; and the second display content includes an operation control of the target application.

In some embodiments, the method further includes:
displaying a third display content of an operating system in the first display region, and/or displaying a fourth display content of the operating system in the second display region;
where, in the hover mode and the non-hover mode, the third display content has a same size and a same position, and the fourth display content has a same size and a same position.

In some embodiments, the method further includes:
in response to the electronic device entering the non-hover mode, acquiring second configuration information, where the second configuration information is configured to indicate a second target size of the second display content in the non-hover mode; and
displaying, based on the second configuration information, the first display content and the second display content in full screen.

In some embodiments, the first target size is preset to be half of a size of the second display content in the non-hover mode.

In some embodiments, acquiring the first configuration information includes: receiving, by the target application, the first configuration information from an operating system, where the first configuration information is generated by the operating system in response to detecting that the electronic device enters the hover mode.

In some embodiments, a target child View of a DecorView is configured to display the second display content, and a SurfaceView layer is configured to display the first display content. The adjusting the position of the second display content to the second display region and adjusting the position of the first display content to the first display region, includes:
moving the target child View from the first display region to the second display region; and
moving the SurfaceView layer from the second display region to the first display region.

In some embodiments, before adjusting the position of the second display content, the target child View is in the first display region by default.

According to a second aspect of the present disclosure, an electronic device is provided, including: a processor; and a memory for storing instructions executable by the processor; where the processor is configured to perform the method as described in the first aspect of the present disclosure.

According to a third aspect of the present disclosure, a non-transitory computer-readable storage medium is provided, which, when instructions stored therein are executed by a processor of an electronic device, causes the electronic device to perform the method as described in the first aspect of the present disclosure.

It should be understood that the above general description and the detailed description below are merely exemplary and explanatory and do not limit the present disclosure.

### BRIEF DESCRIPTION OF THE DRAWINGS

The drawings here are incorporated into and constitute part of the specification and illustrate embodiments consistent with the present disclosure. They are used together with the specification to explain the principles of the present disclosure.
FIG. 1 is a flowchart of a display method illustrated according to some embodiments.
FIG. 2 is a flowchart of a display method illustrated according to some embodiments.
FIG. 3 is a flowchart of a display method illustrated according to some embodiments.
FIG. 4 is a schematic diagram of an adjustment of a size of a display content illustrated according to some embodiments.
FIG. 5 is a schematic diagram of an adjustment of a position of a display content illustrated according to some embodiments.
FIG. 6 is a schematic diagram of an adjustment of a position of a display content illustrated according to some embodiments.
FIG. 7 is a schematic diagram of a screen in a non-hover mode and a hover mode illustrated according to some embodiments.
FIG. 8 is a schematic diagram of a structure of layers in related art.
FIG. 9 is a schematic diagram of an organization structure of a layer tree in related art.
FIG. 10 is a block diagram of a display device illustrated according to some embodiments.
FIG. 11 is a block diagram of an electronic device illustrated according to some embodiments.

### DETAILED DESCRIPTION

Embodiments will be described herein in detail, examples of which are represented in the accompanying drawings. When the following description relates to the accompanying drawings, the same numerals in the different accompanying drawings indicate the same or similar elements unless otherwise indicated. The implementations described in the following embodiments do not represent all embodiments consistent with the present disclosure. Rather, they are only examples of devices and methods consistent with some aspects of the present disclosure as detailed in the appended claims.

When the foldable screen device is in a hover mode (or a suspension mode), the device maintains a suspended position at a certain angle, providing users with a more comfortable operational experience. However, the display of an application in the hover mode depends on the application's adaptation. Applications that are not adapted may have a poor user experience in the hover mode. Thus, further research is needed on how to display applications in the hover mode.

In one related technology, in a hover mode, a size of an application window of an application is modified so that a height of the application window is reduced to half of its original height, with the window displayed in an upper half display region of the screen. A touch panel window is added to a lower half display region of the screen, which may be a window customized by the device manufacturer for mapping users' touch events to operate the application. When a touch event is received from a user in the touch panel window, the touch event is mapped to the upper portion of the application window through touch event mapping. However, in this related technology, the operations in the touch panel window are fixed and the functionality is relatively limited. Users who wish to fully interact with the application still need to operate within the application window, leading to a poor user experience.

In another related technology, in a hover mode, a size of an application window size is modified so that a height of the application window is reduced to half of its original height, with the window displayed in a lower half display region of the screen. A new window is added to an upper half display region of the screen, and a layer corresponding to video playback controls in the lower half display region, is attached to the newly added window in the upper half display region. This achieves video playback in the hover mode. Compared to the previously described related technology, this method offers a better user experience, but it involves modifying the application window's size, creating a new window, and changing the attachment position of the layer corresponding to the video playback controls, which makes the implementation process more complex.

The method provided in the embodiments of the present disclosure does not require modifications to the size of the application window, nor does it require the creation of new windows or the adjustment of layers' attachment positions. It simplifies the implementation process while providing a better user experience compared to the related technologies.

The method provided in the embodiments of the present disclosure is applied to an electronic device, which is a device with a foldable screen, such as a foldable screen smartphone or other device utilizing the foldable screen.

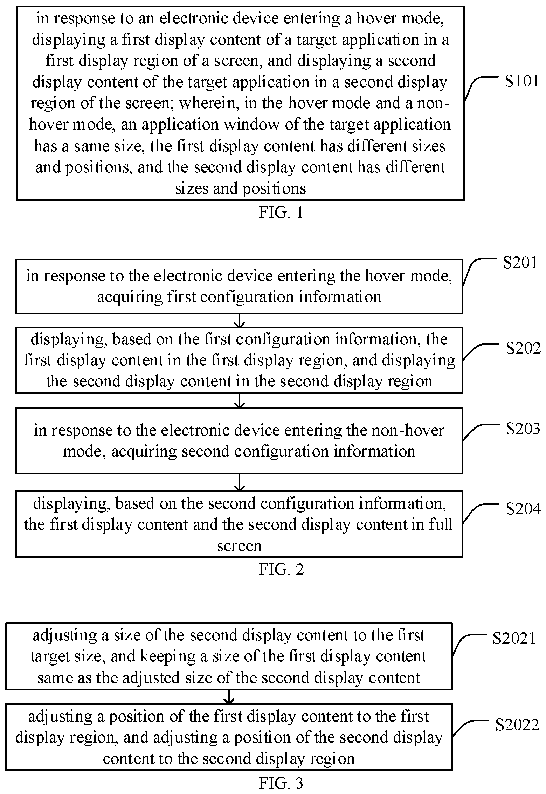

FIG. 1 is a flowchart of a display method illustrated according to some embodiments. The method is performed by the electronic device. Referring to FIG. 1, the method includes the following steps.

Step S101, in response to the electronic device entering a hover mode, displaying a first display content of a target application in a first display region of a screen, and displaying a second display content of the target application in a second display region of the screen. In the hover mode and a non-hover mode, an application window of the target application has a same size, the first display content has different sizes and positions, and the second display content has different sizes and positions.

In this disclosure, the hover mode refers to a mode where the screen of the electronic device is folded at a certain angle, while the non-hover mode refers to a mode where the screen is fully unfolded (not folded). When the device enters the hover mode, the screen of the electronic device is divided into a first display region and a second display region in the hover mode. For example, the first display region may be the upper half of the screen, and the second display region may be the lower half of the screen, with the first display region and the second display region having the same area.

The target application is any one of applications installed on the electronic device. In the case where the target application is run currently, the first display content of the target application is displayed in the first display region, and the second display content of the target application is displayed in the second display region. The first display content and the second display content are different. For example, if the target application is a video playback application, the first display content may be a video being played, and the second display content may be operation controls related to the video.

In the embodiments of the present disclosure, the size of the application window of the target application remains the same in both hover and non-hover modes. For instance, if the application window is displayed in full screen in the non-hover mode, it remains full screen in the hover mode as well. However, the size and position of the first and second display contents differ between the two modes. Specifically, in the non-hover mode, the first and second display contents are mixed (displayed together) within the application window, while in the hover mode, they are displayed separately, with the first display content in the first display region and the second display content in the second display region. Additionally, due to the change in display region, the size of the first display content and the second display content when they are mixed is different from the size when they are displayed separately.

The method provided in the embodiments of the present disclosure allows for the display of different display contents in the first display region and the second display region of the screen, respectively, when the electronic device enters the hover mode. Additionally, the size of the application window of the target application remains the same in both hover and non-hover modes, achieving the effect of displaying the display content of the target application separately without modifying the application window.

FIG. 2 is a flowchart of a display method illustrated according to some embodiments. The method is performed by the electronic device. Referring to FIG. 2, the method includes the following steps.

Step S201, in response to the electronic device entering the hover mode, acquiring first configuration information.

The first configuration information is configured to indicate a first target size of the second display content in the hover mode, where the first target size is a preset size. For example, the first target size may be half of a size of the second display content in the non-hover mode.

In some embodiments, the first configuration information is received by the target application from the operating system. The operating system generates this information upon detecting that the electronic device enters the hover mode. For example, the first configuration information may be configuration information such as 'Config' or 'DisplayMetrics'.

Step S202, displaying, based on the first configuration information, the first display content in the first display region, and displaying the second display content in the second display region.

In the embodiments of the present disclosure, the size of the first display content and the size of the second display content are adjusted based on the first configuration information. The position of the first display content and the position of the second display content are then adjusted accordingly, so that the first display content is displayed in the first display region and the second display content is displayed in the second display region.

In some embodiments, the first display content includes a SurfaceView (canvas view) control, while the second display content includes an operation control of the target application. For instance, the first display content is a video being played, and the second display content includes a title, a progress bar, a pause control, or a play control, etc., of the video.

In some embodiments, the step of displaying, based on the first configuration information, the first display content in the first display region, and displaying the second display content in the second display region, includes the following steps S2021 and S2022.

Step S2021, adjusting a size of the second display content to the first target size, and keeping a size of the first display content same as the adjusted size of the second display content.

In some embodiments, the second display content includes a target child View of a Decor View (decorative view). The step of adjusting the size of the second display content to the first target size includes: adjusting a height of the target child View based on the first target size. The target child View is the first child view of the Decor View, which includes operation controls for the target application.

For example, if the first target size is half the size of the second display content in the non-hover mode, the height of the operation control of the target application is adjusted to half of its original size, i.e., the target child View is adjusted to half the screen's height.

In some embodiments, after adjusting the size of the second display content, the second display content is in the first display region by default. To ensure that the second display content is displayed in the second display region, it is necessary to subsequently adjust the position of the second display content.

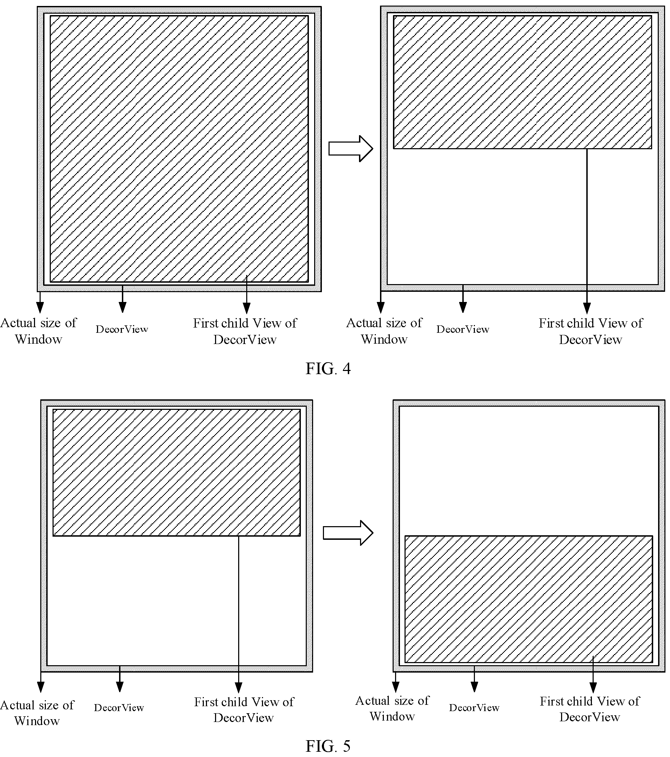

For example, please refer to FIG. 4 for a schematic diagram of an adjustment of the size of the display content. FIG. 4 shows a display situation of the first child View before adjustment on the left, while, on the right, FIG. 4 shows a display situation of the first child View after adjustment. As can be seen from FIG. 4, when adjusting the size of the first child View, the actual size of the application window remains unchanged, i.e., the size of the DecorView remains the same. Only the size of the first child View is adjusted, with its height reduced to half of its original height while its width remains unchanged. After adjustment, the first child View defaults to being located in the first display region.

Additionally, it should be noted that for the first display content, in the absence of specific adjustments to it, its size and position will change in accordance with the changes in the size and position of the second display content. That is, the size and position of the first display content will be kept consistent with the size and position of the second display content.

Step S2022, adjusting a position of the first display content to the first display region, and adjusting a position of the second display content to the second display region.

In the embodiments of the present disclosure, it is required to display the first display content in the first display region and to display the second display content in the second display region. Therefore, after adjusting the sizes of the first display content and the second display content, the positions of the first display content and the second display content are required to be adjusted accordingly.

In some embodiments, this involves adjusting coordinates of the second display content and moving the second display content from the first display region to the second display region; and adjusting coordinates of a layer corresponding to the first display content and moving the first display content from the second display region to the first display region. Optionally, a coordinate system can be established on the screen where the horizontal coordinate represents the screen's width, and the vertical coordinate represents the screen's height. Adjusting the coordinates of the second display content includes adjusting the vertical coordinate of the second display content, and similarly, adjusting the coordinates of the layer corresponding to the first display content includes adjusting the vertical coordinate of the layer corresponding to the first display content.

For example, please refer to FIG. 5 for a schematic diagram of an adjustment of a position of the display content, in which the first child View is moved downward, from the first display region to the second display region.

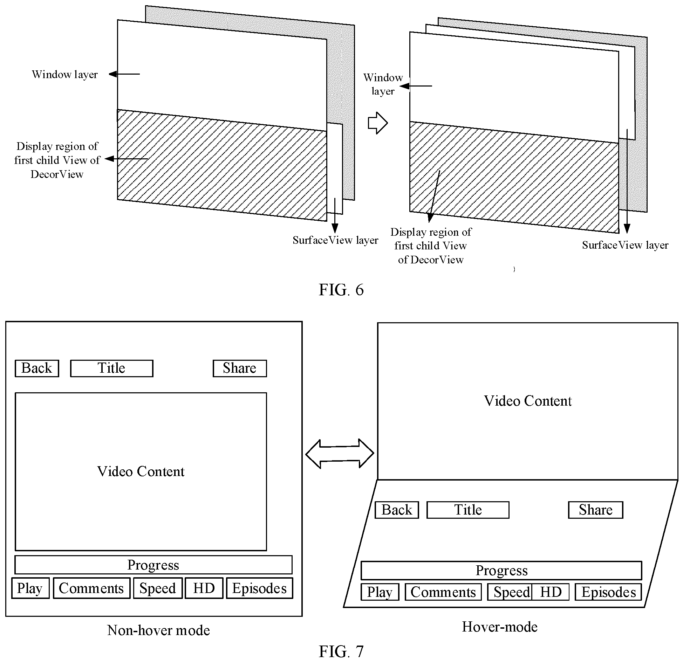

For example, referring to FIG. 6, since the SurfaceView layer (the layer corresponding to the first display content shown on the left) is moved to the second display region along with the first child View, the SurfaceView layer is required to be moved again to the first display region, as shown on the right of FIG. 6. In this case, the SurfaceView layer is displayed below the Window layer, and the first child View is displayed on the Window layer. The Window layer is a concrete representation of the Decor View.

It should be noted that the adjustment process in the above steps S2021 and S2022 is invisible to the user, and the process from the electronic device entering the hover mode to displaying the first display content in the first display region and the second display content in the second display region is so fast that the user is unable to perceive it. That is, for the user, when the electronic device enters the hover mode, the user can directly see that the first display content is displayed in the first display region and the second display content is displayed in the second display region, without seeing the adjustment process described above.

For example, the target application is a video playback application. Referring to a schematic diagram of the screen in non-hover mode and hover mode shown in FIG. 7, it can be seen that when switching from the non-hover mode to the hover mode, the video content is displayed in the first display region, and the operation controls (e.g., a return control, a progress control, a playback control, and so on) of the video playback application are displayed in the second display region.

In the embodiments of the present disclosure, the sizes and positions of the first display content and the second display content are adjusted, and the application window (see the Window layer shown in FIG. 6) does not change during the adjustment process, and therefore, the effect of displaying the display content of the target application separately can be realized while keeping the application window unchanged.

Additionally, in some embodiments, since the second display content includes the operation controls of the target application and the application window does not change during the adjustment process, the display content of the operating system displayed in the application window does not change. That is, a third display content of the operating system is displayed in the first display region, and/or, a fourth display content of the operating system is displayed in the second display region; where in the hover mode and the non-hover mode, the third display content has a same size and a same position, and the fourth display content has a same size and a same position. For example, the third display content is a status bar and the fourth display content is a navigation bar.

In the embodiments of the present disclosure, while realizing the separate display of the display content of the target application, the display mode of the display content of the operating system will not be changed, so that it is convenient for the user to operate the display content of the operating system according to the usage habits to enhance the user experience.

Step S203, in response to the electronic device entering the non-hover mode, acquiring second configuration information.

The second configuration information is configured to indicate a second target size of the second display content in the non-hover mode.

In some embodiments, the second configuration information is received by the target application from the operating system. The operating system generates the second configuration information upon detecting that the electronic device enters the non-hover mode. For example, the second configuration information may be configuration information such as 'Config', 'DisplayMetrics', etc.

Step S204, displaying, based on the second configuration information, the first display content and the second display content in full screen.

Based on the second configuration information, the size of the first display content is restored to the second target size, and then all Views of the target application will be measured at full-screen height to display the first display content and the second display content in full screen. For example, as shown in the schematic diagram in FIG. 7, the display mode can be switched from the hover mode to the non-hover mode.

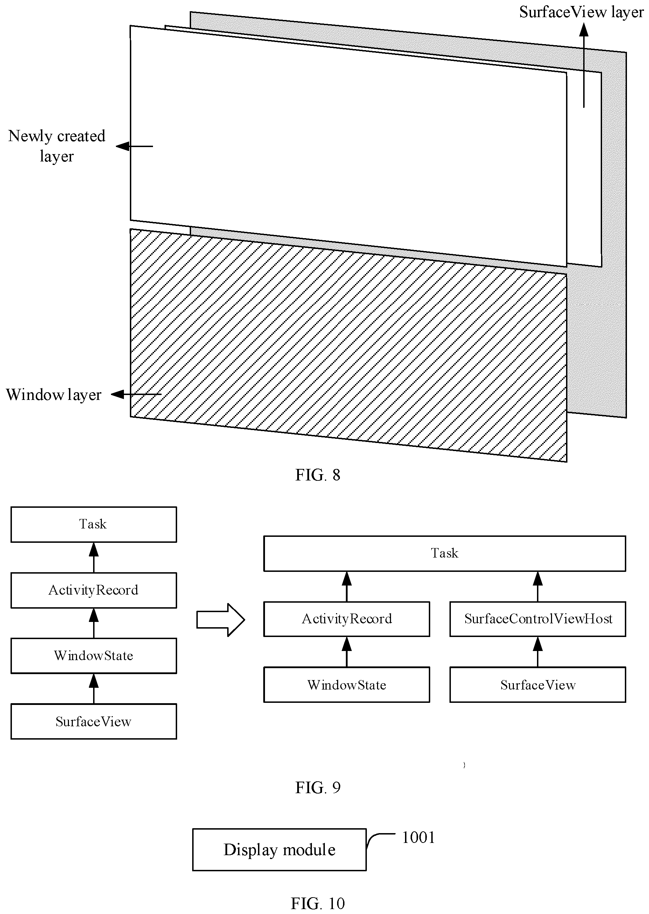

In addition, a schematic diagram of layers in the second related technology described above is shown in FIG. 8. Referring to FIG. 8, it can be seen that the height of the Window layer was reduced to half of its original height and a new layer was created. In this case, the organization structure of the SurfaceFlinger layer tree for the application changes when the application's interface is displayed in the hover mode. For example, referring to a schematic diagram of an organization structure as shown in FIG. 9. On the left, FIG. 9 shows the organization structure when displayed in the non-hover mode, where the SurfaceView layer is attached to the WindowState, i.e., the attachment position of the SurfaceView layer is in the application window. On the right, FIG. 9 shows the organization structure when displayed in the hover mode, where the SurfaceControlViewHost is the newly created layer, and in the hover mode, the attachment position of the SurfaceView layer is in the SurfaceControlViewHost layer.

In contrast, the display method provided in the embodiments of this disclosure ensures that, after switching from the non-hover mode to the hover mode, the application's interface is displayed in the hover mode, and the organization structure of the SurfaceFlinger layer tree of the application remains unchanged. That is, in both non-hover and hover modes, the SurfaceView layer remains attached to the application window with an organization structure.

The method provided in the embodiments of the present disclosure allows for the display of different display contents in the first display region and the second display region of the screen, respectively, when the electronic device enters the hover mode. Additionally, the size of the application window of the target application remains the same in both hover and non-hover modes. As such, the effect of displaying the display content of the target application separately can be achieved without modifying the application window, changing the attachment position of the SurfaceView layer, and changing the organization structure of the SurfaceFlinger layer tree. This method reverses the adaptation of the hover mode of the electronic device from the system side, enhancing the user experience in the hover mode.

According to a first aspect of the present disclosure, a display method is provided, which includes:
in response to an electronic device entering a hover mode, displaying a first display content of a target application in a first display region of a screen, and displaying a second display content of the target application in a second display region of the screen;
where, in the hover mode and a non-hover mode, an application window of the target application has a same size, the first display content has different sizes and positions, and the second display content has different sizes and positions.

In some embodiments, in response to the electronic device entering the hover mode, displaying the first display content of the target application in the first display region of the screen, and displaying the second display content of the target application in the second display region of the screen, includes:
in response to the electronic device entering the hover mode, acquiring first configuration information, where the first configuration information is configured to indicate a first target size of the second display content in the hover mode; and
displaying, based on the first configuration information, the first display content in the first display region, and displaying the second display content in the second display region.

In some embodiments, displaying, based on the first configuration information, the first display content in the first display region, and displaying the second display content in the second display region, includes:
adjusting a size of the second display content to the first target size, and keeping a size of the first display content same as the adjusted size of the second display content; and
adjusting a position of the first display content to the first display region, and adjusting a position of the second display content to the second display region.

In some embodiments, the second display content includes a target child View of a Decor View; and adjusting the size of the second display content to the first target size includes:
adjusting a height of the target child View based on the first target size.

In some embodiments, adjusting the position of the first display content to the first display region and adjusting the position of the second display content to the second display region, includes:
adjusting coordinates of the second display content and moving the second display content from the first display region to the second display region; and
adjusting coordinates of a layer corresponding to the first display content and moving the first display content from the second display region to the first display region.

In some embodiments, the first display content includes a Surface View control; and the second display content includes an operation control of the target application.

In some embodiments, the method further includes:
displaying a third display content of an operating system in the first display region, and/or displaying a fourth display content of the operating system in the second display region;
where, in the hover mode and the non-hover mode, the third display content has a same size and a same position, and the fourth display content has a same size and a same position.

In some embodiments, the method further includes:
in response to the electronic device entering the non-hover mode, acquiring second configuration information, where the second configuration information is configured to indicate a second target size of the second display content in the non-hover mode; and
displaying, based on the second configuration information, the first display content and the second display content in full screen.

In some embodiments, the first target size is preset to be half of a size of the second display content in the non-hover mode.

In some embodiments, acquiring the first configuration information includes: receiving, by the target application, the first configuration information from an operating system, where the first configuration information is generated by the operating system in response to detecting that the electronic device enters the hover mode.

In some embodiments, a target child View of a DecorView is configured to display the second display content, and a SurfaceView layer is configured to display the first display content. The adjusting the position of the second display content to the second display region and adjusting the position of the first display content to the first display region, includes:
moving the target child View from the first display region to the second display region; and
moving the SurfaceView layer from the second display region to the first display region.

In some embodiments, before adjusting the position of the second display content, the target child View is in the first display region by default.

FIG. 10 is a block diagram of a display device according to some embodiments, configured in an electronic device. Referring to FIG. 10, the device includes:
a display module 1001 configured to, in response to an electronic device entering a hover mode, display a first display content of a target application in a first display region of a screen, and display a second display content of the target application in a second display region of the screen;
where, in the hover mode and a non-hover mode, an application window of the target application has a same size, the first display content has different sizes and positions, and the second display content has different sizes and positions.

In some embodiments, the display module 1001 is configured to:
in response to the electronic device entering the hover mode, acquire first configuration information, where the first configuration information is configured to indicate a first target size of the second display content in the hover mode; and
display, based on the first configuration information, the first display content in the first display region, and display the second display content in the second display region.

In some embodiments, the display module 1001 is configured to:
adjust a size of the second display content to the first target size, and keep a size of the first display content same as the adjusted size of the second display content; and
adjust a position of the first display content to the first display region, and adjust a position of the second display content to the second display region.

In some embodiments, the second display content includes a target child View of a DecorView; and the display module 1001 is configured to:
adjust a height of the target child View based on the first target size.

In some embodiments, the display module 1001 is configured to:
adjust coordinates of the second display content and move the second display content from the first display region to the second display region; and
adjust coordinates of a layer corresponding to the first display content and move the first display content from the second display region to the first display region.

In some embodiments, the first display content includes a Surface View control; and the second display content includes an operation control of the target application.

In some embodiments, the display module 1001 is configured to:
display a third display content of an operating system in the first display region, and/or display a fourth display content of the operating system in the second display region;
where, in the hover mode and the non-hover mode, the third display content has a same size and a same position, and the fourth display content has a same size and a same position.

In some embodiments, the display module 1001 is configured to:
in response to the electronic device entering the non-hover mode, acquire second configuration information, where the second configuration information is configured to indicate a second target size of the second display content in the non-hover mode; and
display, based on the second configuration information, the first display content and the second display content in full screen.

In some embodiments, the first target size is preset to be half of a size of the second display content in the non-hover mode.

In some embodiments, the display module 1001 is configured to:
receive, by the target application, the first configuration information from an operating system, where the first configuration information is generated by the operating system in response to detecting that the electronic device enters the hover mode.

In some embodiments, a target child View of a DecorView is configured to display the second display content, and a SurfaceView layer is configured to display the first display content. The display module 1001 is configured to:
move the target child View from the first display region to the second display region; and
move the SurfaceView layer from the second display region to the first display region.

In some embodiments, before adjusting the position of the second display content, the target child View is in the first display region by default.

Regarding the device in the above embodiments, the specific ways in which the various modules perform operations have been described in detail in the corresponding method embodiments and will not be elaborated further here.

The embodiments of the present disclosure also provide an electronic device, which includes: a processor and a memory configured to store instructions executable by the processor. The processor is configured to perform the display method described in the above embodiments.

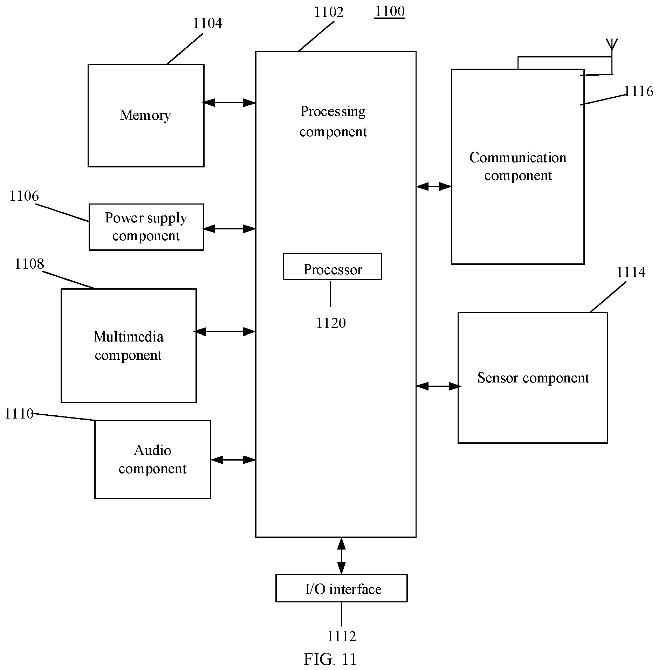

FIG. 11 is a block diagram of an electronic device 1100 illustrated according to some embodiments.

Referring to FIG. 11, the electronic device 1100 may include one or more of the following components: a processing component 1102, a memory 1104, an audio component 1110, an input/output (I/O) Interface 1112, a sensor component 1114, and a communication component 1116.

The processing component 1102 generally controls the overall operation of the electronic device 1100, such as operations related to display, phone calls, data communication, camera operations, and recording operations. The processing component 1102 may include one or more processors 1120 to execute instructions for performing all or part of the steps of the methods described. Additionally, the processing component 1102 may include one or more modules to facilitate interaction between the processing component 1102 and other components. For example, the processing component 1102 may include a multimedia module to facilitate interaction between the multimedia component 1108 and the processing component 1102.

The memory 1104 is configured to store various types of data to support the operation of the electronic device 1100. Examples of such data include instructions for operating any applications or methods on the electronic device 1100, contact data, phone book data, messages, pictures, videos, etc. The memory 1104 may be implemented using any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic storage, flash memory, magnetic disks, or optical discs.

The power component 1106 provides power to various components of the electronic device 1100. The power component 1106 may include a power management system, one or more power sources, and other components associated with generating, managing, and distributing power to the electronic device 1100.

The multimedia component 1108 includes a screen providing an output interface between the electronic device 1100 and the user. In some embodiments, the screen may include a liquid crystal display (LCD) and a touch panel (TP). If the screen includes a touch panel, it may be implemented as a touch screen to receive input signals from the user. The touch panel includes one or more touch sensors to detect touches, slides, and gestures on the touch panel. These touch sensors can sense not only the boundaries of touch or slide actions but also the duration and pressure associated with these actions. In some embodiments, the multimedia component 1108 may include a front-facing camera and/or a rear-facing camera. When the electronic device 1100 is in an operational mode such as a capture mode or video mode, the front-facing and/or rear-facing cameras can receive external multimedia data. Each front-facing camera and each rear-facing camera may be a fixed optical lens system or have focusing and optical zoom capabilities.

The audio component 1110 is configured to output and/or input audio signals. For example, the audio component 1110 may include a microphone (MIC) that, when the electronic device 1100 is in operational modes such as call mode, recording mode, and voice recognition mode, is configured to receive external audio signals. The received audio signals may be further stored in the memory 1104 or transmitted via communication component 1116. In some embodiments, the audio component 1110 may also include a speaker to output audio signals.

The I/O Interface 1112 provides an interface between the processing component 1102 and peripheral interface modules, such as keyboards, click wheels, and buttons. These buttons may include, but are not limited to, home button, volume button, start button, and lock button.

The sensor component 1114 includes one or more sensors to provide various aspects of status assessment for the electronic device 1100. For example, the sensor component 1114 can detect the open/close status of the electronic device 1100, the relative positioning of components such as the display and keyboard of the electronic device 1100, and can detect changes in the position of electronic device 1100 or its components, user contact with the electronic device 1100, the orientation, acceleration/deceleration, and temperature changes of the electronic device 1100. The sensor component 1114 may include proximity sensors configured to detect the presence of nearby objects without physical contact. The sensor component 1114 may also include light sensors, such as CMOS or CCD image sensors, for imaging applications. In some embodiments, the sensor component 1114 may also include accelerometers, gyroscopes, magnetic sensors, pressure sensors, or temperature sensors.

The communication component 1116 facilitates wired or wireless communication between the electronic device 1100 and other devices. The electronic device 1100 may connect to wireless networks based on communication standards such as Wi-Fi, 2G, or 3G, or their combinations. In an embodiment, the communication component 1116 may receive broadcast signals or broadcast-related information from an external broadcast management system via broadcast channels. In another embodiment, the communication component 1116 may also include a near-field communication (NFC) module to facilitate short-range communication. For example, the NFC module may use technologies such as radio frequency identification (RFID), Infrared Data Association (IrDA), ultra-wideband (UWB), Bluetooth^{®} (BT), and others.

In an embodiment, the electronic device 1100 can be implemented using one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components to execute the methods described.

In an embodiment, a non-transitory computer-readable storage medium is also provided, e.g., the memory 1104 including instructions that, when executed by the processor 1120 of the electronic device 1100, enable the device to perform the display method described. For example, the non-transitory computer-readable storage medium can be ROM, random access memory (RAM), CD-ROM, magnetic tape, floppy disks, optical data storage devices, etc.

The embodiments of the present disclosure also provide a non-transitory computer-readable storage medium. When instructions on the storage medium are executed by a processor of an electronic device, the electronic device is enabled to perform the display method in the above embodiments.

The specification and embodiments are merely exemplary, and the true scope of the invention is defined by the following claims.

## Claims

1. A display method, comprising:
in response to an electronic device entering a hover mode, displaying (S 101) a first display content of a target application in a first display region of a screen, and displaying a second display content of the target application in a second display region of the screen;
wherein, in the hover mode and a non-hover mode, an application window of the target application has a same size, the first display content has different sizes and positions, and the second display content has different sizes and positions.

2. The method according to claim 1, wherein, in response to the electronic device entering the hover mode, displaying the first display content of the target application in the first display region of the screen, and displaying the second display content of the target application in the second display region of the screen, comprises:
in response to the electronic device entering the hover mode, acquiring (S201) first configuration information, wherein the first configuration information is configured to indicate a first target size of the second display content in the hover mode; and
displaying (S202), based on the first configuration information, the first display content in the first display region, and displaying the second display content in the second display region.

3. The method according to claim 2, wherein displaying, based on the first configuration information, the first display content in the first display region, and displaying the second display content in the second display region, comprises:
adjusting (S2021) a size of the second display content to the first target size, and keeping a size of the first display content same as the adjusted size of the second display content; and
adjusting (S2022) a position of the first display content to the first display region, and adjusting a position of the second display content to the second display region.

4. The method according to claim 3, wherein the second display content comprises a target child View of a DecorView; and wherein adjusting the size of the second display content to the first target size, comprises:
adjusting a height of the target child View based on the first target size.

5. The method according to claim 3, wherein adjusting the position of the first display content to the first display region and adjusting the position of the second display content to the second display region, comprises:
adjusting coordinates of the second display content and moving the second display content from the first display region to the second display region; and
adjusting coordinates of a layer corresponding to the first display content and moving the first display content from the second display region to the first display region.

6. The method according to any one of the preceding claims , wherein the first display content comprises a SurfaceView control; and the second display content comprises an operation control of the target application.

7. The method according to any one of the preceding claims , further comprising:
displaying a third display content of an operating system in the first display region, and/or displaying a fourth display content of the operating system in the second display region;
wherein, in the hover mode and the non-hover mode, the third display content has a same size and a same position, and the fourth display content has a same size and a same position.

8. The method according to any one of the preceding claims , further comprising:
in response to the electronic device entering the non-hover mode, acquiring (S203) second configuration information, wherein the second configuration information is configured to indicate a second target size of the second display content in the non-hover mode; and
displaying (S204), based on the second configuration information, the first display content and the second display content in full screen.

9. The method according to any one of the preceding claims 2-8, wherein the first target size is preset to be half of a size of the second display content in the non-hover mode.

10. The method according toany one of the preceding claims 2-9, wherein acquiring the first configuration information comprises:
receiving, by the target application, the first configuration information from an operating system, wherein the first configuration information is generated by the operating system in response to detecting that the electronic device enters the hover mode.

11. The method according to any one of the preceding claims 3-10, wherein a target child View of a DecorView is configured to display the second display content, and a SurfaceView layer is configured to display the first display content; and wherein adjusting the position of the second display content to the second display region and adjusting the position of the first display content to the first display region, comprises:
moving the target child View from the first display region to the second display region; and
moving the SurfaceView layer from the second display region to the first display region.

12. The method according to claim 11, wherein, before adjusting the position of the second display content, the target child View is in the first display region by default.

13. A display device, comprising:
a display module (1001) configured to, in response to an electronic device entering a hover mode, display a first display content of a target application in a first display region of a screen, and display a second display content of the target application in a second display region of the screen;
wherein, in the hover mode and a non-hover mode, an application window of the target application has a same size, the first display content has different sizes and positions, and the second display content has different sizes and positions.

14. A non-transitory computer-readable storage medium, storing instructions executable by a processor of an electronic device, which, when executed by the processor, cause the processor to the method according to any one of claims 1 to 12.
